# EUROPÄISCHE PATENTSCHRIFT

(11) **EP 0 665 079 B1**
(45) Veröffentlichungstag und Bekanntmachung des Hinweises auf die Patenterteilung: **07.01.1999**
(21) Anmeldenummer: 94101332.8
(22) Anmeldetag: 29.01.1994
(51) Int. Cl.: B23K 9/02, B23K 33/00

(54) **Verfahren zum Verbinden von Metallteilen mittels Lichtbogen-Schmelzschweissen**
Method for bonding metallic pieces by arc fusion welding
Procédé pour reliér pièces métalliques au moyen d'un soudage par fusion à l'arc

(43) Veröffentlichungstag der Anmeldung: 02.08.1995
(73) Patentinhaber: ASEA BROWN BOVERI AG, 5400 Baden (CH)
(72) Erfinder: Kuhnen, Gottfried, CH-5452 Oberrohrdorf (CH)

(56) Entgegenhaltungen:
- EP-A- 0 104 325
- EP-A- 0 169 274
- FR-A- 1 191 293
- US-A- 2 415 987
- US-A- 4 182 950
- US-A- 4 255 641
- US-A- 5 004 884

## Beschreibung

### Technisches Gebiet

Die Erfindung betrifft ein verfahren zum verbinden von Metallteilen mittels Lichtbogen-Schmelzschweissen durch eine volumenarme Schweissnaht (Engspaltschweissen).

### Stand der Technik

Aus DE 26 33 829 ist bereits ein Verfahren zum verbinden von Metallteilen mittels Lichtbogen-Schmelzschweissen durch eine volumenarme Schweissnaht bekannt. Die zu verbindenden und einen Engspalt bildenden Werkstückteile werden dabei zunächst an ihrer Stossfuge durch eine mittels Elektonenstrahl-, Plasma-, Laserstrahl- oder Argonarc-Schweissverfahren erzeugte Grundnaht mit oder ohne Zusatzwerkstoff verschweisst. Danach werden die durch den Engspalt gebildetet Werkstückflanken durch abwechselnd sich an die eine und an die andere Flanke anlegende Schweissraupe nach dem Unterpulverschweissverfahren verbunden, indem jede Schweissraupe der Unterpulverschweissung so gelegt wird, dass sie die darunterliegende im mittleren Drittel des Engspaltes überlappt und jeweils nur eine Werkstückflanke zum Aufschmelzen bringt, dass die Breite des Engspaltes gleich vier mal dem Durchmesser des zur Verwendung kommenden schweissdrahtes und die Stromdichte im Schweissdraht während des Unterpulverschweissens 50 A/mm² beträgt und dass die Schweissgeschwindigkeit so bemessen wird, dass die Streckenenergie bei einem Drahtdurchmesser von 2,5 mm 8,5 kJ/cm, bei einem Drahtdurchmesser von 3 mm 12,5 kJ/cm und einem Drahtdurchmesser von 4,0 mm 22 kJ/cm beträgt.

Das Verfahren ist besonders gut anwendbar zum Verbinden rotationssymmetrischer Körper des Grossmaschinenbaus. Auch dickwandige Bauteile, die nur von einer Seite zugänglich sind und daher wurzelseitig nicht nachgeschweisst werden können, können mit dem Verfahren nach DE 26 33 829 gut verbunden werden. Ein bevorzugtes Anwendungsgebiet des Verfahrens ist die Verbindung von scheiben- und hohlzylinderförmigen Schmiedestücken, welche zum Bau von Rotoren für Dampf- und Gasturbinen, für Verdichter sowie für Turbogeneratoren Verwendung finden.

Der Vorteil dieses Verfahrens besteht darin, dass ein einschlussfreies, feinkörniges Gefüge an der Verbindungsstelle der Werkstückteile entsteht. Sowohl im Schweissgut als auch in der Wärmeeinflusszone ist kein Primärgefüge mehr vorhanden. Dadurch erübrigt sich eine nachträgliche Normalglühung oder Vergütung.

Demgegenüber hat das Verfahren aber den Nachteil, dass es sich nur halbautomatisch einsetzen lässt. Ausserdem muss die Grundnaht vertikal im Wurzelbereich geschweisst werden und eine bestimmte Tiefe aufweisen, damit sich beispielsweise der geschweisste Rotor nicht verbiegt, wenn er dann horizontal mittels Unterpulverengspaltschweissen fertiggeschweisst wird.

### Darstellung der Erfindung

Die Erfindung versucht, diese Nachteile zu vermeiden. Ihr liegt die Aufgabe zugrunde, bei einem Schweissverfahren zur Erzeugung volumenarmer Nähte höchster Qualität, mit welchem auch komplizierte und voluminöse Werkstücke und insbesondere auch Werkstücke, die nur auf einer Seite für den Schweissprozess zugänglich sind, verbunden werden, eine im Vergleich zum Stand der Technik höhere Wirtschaftlichkeit infolge vollautomatischem Schweissen zu erreichen.

Erfindungsgemäss wird dies dadurch erreicht, dass bei einem Verfahren gemäss Oberbegriff des Anspruches 1 die zu verbindenden Metallteile neben dem Engspalt noch einen extremen Engspalt und eine Zentrierversatzung aufweisen und zunächst durch die Zentrierversatzung zueinander positioniert werden, im Nahtgrundbereich ein Entlastungswulst derart ausgebildet wird, dass bei der Schweissung eine Solldurchschmelzstelle entsteht, und die durch den extremen Engspalt gebildeten Werkstückflanken mittels vollautomatischen Wolfram-Inert-Gas-(WIG)-Schweissverfahrens oder Metall-Lichtbogen-Schweissverfahrens unter Schutzgas (MSG-Schweissverfahren) durch mehrlagige Schweissraupen, welche sich jeweils über die gesamte Breite des extremen Engspaltes erstrecken, verbunden werden. Die durch den Engspalt gebildeten Werkstückflanken werden dann in bekannter Art und Weise mittels Unterpulverschweissverfahren miteinander verbunden.

Die Vorteile der Erfindung sind unter anderem darin zu sehen, dass der extreme Engspalt automatisch geschweisst werden kann und somit eine hohe Wirtschaftlichkeit des Verfahrens erzielt wird. Es werden Schweissnähte höchster Qualität erzeugt, so dass eine nachträgliche Wärmebehandlung der verbundenen Werkstücke nicht notwendig ist. Insbesondere können Einzelteile miteinander verbunden werden, die nur von einer Seite aus für den Schweissprozess zugänglich sind.

Es ist besonders zweckmässig, wenn ein Entlastungswulst mit einer Breite verwendet wird, welche ca. das Dreifache seiner Höhe beträgt. Dadurch wird gewährleistet, dass beim Schweissen entstehende Einbrandkerben beidseitig der Durchschmelzraupe und damit nur ausserhalb des tragenden Querschnitts entstehen.

Ferner ist es vorteilhaft, wenn ein extremer Engspalt verwendet wird, dessen Höhe das Sechs- bis Zehnfache seiner Breite, mindestens aber 40mm, beträgt. Da mit zunehmender Schweissnahthöhe die Wärmeeinbringung immer grösser wird, ist es nur bei diesen Abmassen möglich, auch die letzte Schweissraupe in nur einer Lage zu schweissen, so dass eine volle Automatisierung ermöglicht wird.

Schliesslich wird mit Vorteil beim WIG- bzw. MSG-Schweissverfahren ein Schweissdraht verwendet wird, dessen Durchmesser ein Fünftel bis ein Viertel der Breite des extremen Engspaltes, mindestens aber 0,8 mm und höchstens 1,6 mm, beträgt. Dadurch werden eine sichere Drahtführung und ein gutes Schweissergebnis erreicht.

Ausserdem wird in vorteilhafter Weise beim WIG- bzw. MSG-Schweissverfahren in Abhängigkeit von der Vorwärmtemperatur, welche vorzugsweise oberhalb von 200°C liegt, mit Stromstärken im Bereich von 200 bis 300 A bei einem Vorschub von 50 bis 200 mm pro Minute gearbeitet.

Schliesslich ist von Vorteil, wenn als Schutzgas Argon oder Argon mit maximal 8% Wasserstoff oder ein Argon-Helium-Gemisch mit 30 bis 70%, vorzugsweise 50%, Argon, Rest Helium, verwendet wird. Damit können qualitativ hervorragende Schweissnähte erzeugt werden.

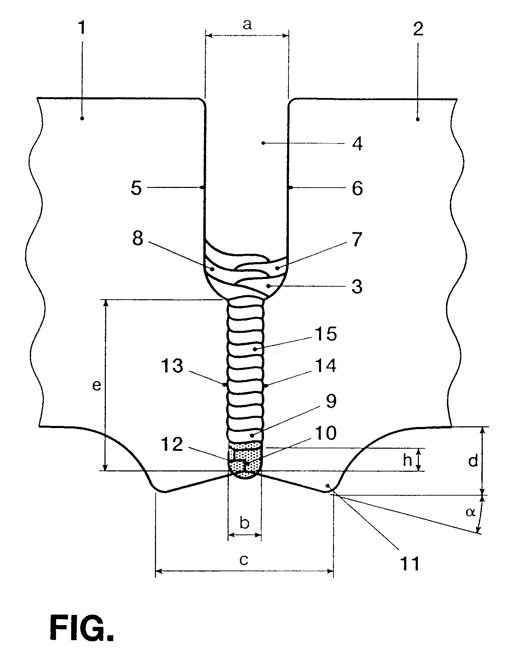

### Kurze Beschreibung der Zeichnung

In der Zeichnung ist ein Ausführungsbeispiel der Erfindung dargestellt.

Die einzige Figur stellt einen schematischen Querschnitt durch die zu verbindenden Werkstückteile im Bereich der Schweissnaht dar. Es sind nur die für das Verständnis der Erfindung wesentlichen Elemente gezeigt.

### Weg zur Ausführung der Erfindung

Nachfolgend wird die Erfindung anhand von Ausführungsbeispielen näher erläutert.

In der Figur ist der Querschnitt durch die zu verbindenen Werkstückteile im Bereich der Schweissnaht schematisch dargestellt. Die zu verbindenden Metallteile sind mit 1 und 2 bezeichnet, ihre gegenüberliegenden parallelen Werkstückflanken im Engspalt 4 mit 5 und 6 und im extremen Engspalt 9 mit 13 und 14. Auf der der Schweissung nicht zugänglichen Seite (beispielsweise der Innenseite von Hohlkörpern) stossen die zu verbindenden Metallteile 1, 2 an einer Zentrierversatzung 10 aneinander und werden zueinander positioniert. Im Nahtgrundbereich ist ein Entlastungswulst 11 so ausgebildet, dass beim Schweissen eine Solldurchschmelzstelle 12 entsteht, so dass beim Schweissen eine Verschmelzung der Zentrierversatzung 10 zwangsweise erreicht wird. Einbrandkerben treten dann nur beidseitig der Durchschmelzraupe auf, während der tragende Querschnitt keine Einbrandkerben aufweist, was sich sehr günstig auf das Beanspruchungsverhalten des Werkstoffes auswirkt.

Die Zentrierversatzung 10 hat in diesem Ausführungsbeispiel eine Höhe h von 5 mm, der Entlastungswulst 11 eine Breite c von insgesamt 40 mm und eine Höhe d von 15 mm. Der zwischen der Horizontalen und der Entlastungswulst gebildete Winkel α beträgt 15°. Auf Grund dieser geometrischen Abmessungen wird mit eng tolerierten Schweissdatenbereichen die Verschmelzung der Zentrierversatzung 10 erreicht.

Die Verbindung der parallelen Werkstückflanken 13, 14 im extremen Engspalt 9 mit einer Breite b von in diesem Ausführungsbeispiel 5 mm und einer Höhe e von ca. 40 mm erfolgt durch vollautomatisches WIG-Schweissen. Die Schweissraupen 15 reichen dabei von der einen Werkstückflanke 13 zur gegenüberliegenden Werkstückflanke 14 und schmelzen daher jeweils beide Werkstückflanken auf. Wenn der Lichtbogen einmal in Position gebracht worden ist, ist keine Veränderung mehr nötig, so dass der Schweissvorgang automatisch ablaufen kann. Bei dieser WIG-Schweissung wird ein Schweissdraht mit einem Durchmesser von 1,2 mm verwendet. In Abhängigkeit von der Vorwärmtemperatur wird mit Stromstärken im Bereich von 200 bis 300 A bei einem Vorschub von 50 bis 200 mm pro Minute gearbeitet. Als Inertgas wird Argon verwendet. Selbstverständlich können in anderen Ausführungsbeispielen auch ein Gemisch aus Argon und maximal 8% Wasserstoff oder ein Gemisch aus Argon und 30 bis 70% Helium verwendet werden, wobei optimale Ergebnisse bei Verwendung von gleichen Anteilen an Argon und Helium erzielt werden. Mit der WIG-Schweissung werden qualitativ hervorragende Schweissnähte erzeugt.

Verwendet man dagegen in einem anderen Ausführungsbeispiel zum Verschweissen des extremen Engspaltes 9 das MSG-Verfahren, so muss man auf Grund des bekannten Verspritzens von Metallteilchen im Raum Lichtbogen/Schutzgas/Schmelzbad mit gewissen Verunreinigungen von Schweissdrahtzuführungsrohr, Schutzgasdüse und Werkstückflanken der Schweissnute sowie Schlackenbelägen auf der Schweissraupenoberfläche rechnen, so dass die Güte der Schweissnaht im extremen Engspalt 9 auf Grund von möglichen Bindefehlern nicht so hervorragend wie beim WIG-Verfahren ist.

Nach Herstellung dieser "Grundnaht" wird dann der durch die Werkstückflanken 5 und 6 gebildete Engspalt 4 mit der Breite a von <16 mm nach dem Unterpulverschweissverfahren derart geschlossen, dass abwechselnd Schweissraupen 7 an die Werkstückflanke 6 und Schweissraupen 8 an die Werkstückflanke 5 gelegt werden. Diese überlappen sich jeweils im mittleren Drittel des Engspaltes 4. Durch die jeweilige Achsenlage des Schweissdrahtes wird dafür gesorgt, dass gleichzeitig nur je eine der Werkstückflanken 5 oder 6 während des Schweissvorganges aufgeschmolzen wird. Dadurch wird ein vorteilhaftes Gefüge erreicht, die Zusammensetzung des Schmelzgutes wird über den gesamten Nahtquerschnitt konstant gehalten und die Spannungen beim Abkühlen bewegen sich in erträglichen Grenzen.

Unter realen Schweissbedingungen ergibt sich, dass die Nahtbreite im extremen Engspalt 9 mit Zunahme der Anzahl der Schweissraupen vom WIG- bzw. MSG-Schweissverfahren 15 grösser wird. Das wird verursacht durch die geringe Abschmelzleistung des WIG- bzw. MSG-Verfahrens und die immer grösser werdende Wärmeeinbringung. Das bedeutet, dass der extreme Engspalt 9 nur eine bestimmte maximale Höhe e aufweisen darf, da sonst die Überbrückung des extremen Engspaltes 9 nicht mehr mit nur einer Schweisslage erreicht werden kann. Damit wäre ein automatisches Schweissverfahren nicht mehr möglich.

Das erfindungsgemässe Verfahren lässt sich sowohl auf rotationssymmetrische Körper als auch auf andere dickwandige Metallteile anwenden, insbesondere auf solche, die nur von einer Seite aus zugänglich sind und wurzelseitig nicht nachgeschweisst werden können, beispielsweise Platten, Rohre, Scheiben und Hohlzylinder aus niedrig- bzw. hochlegierten metallischen Werkstoffen.

Ein bevorzugtes Anwendungsgebiet stellt die Fertigung von Rotoren energieumwandelnder Maschinen dar, die aus einzelnen Rotationskörpern mit Hohlräumen oder stirnseitigen Eindrehungen aufgebaut sind, beispielsweise aus scheiben- oder hohlzylinderförmigen Schmiedestücken gleicher Festigkeit oder gleicher Dicke. Diese Schmiedestücke werden zuerst im "Wurzelbereich", d.h. im Bereich des extremen Engspaltes 9, vertikal mit Hilfe des oben beschriebenen WIG- bzw. MSG-Schweissverfahrens verbunden. Dann wird der Rotor horizontal mittels UP-Schweissung im Bereich des Engspaltes 4 fertig geschweisst. Damit sich dabei der Rotor nicht verbiegt, muss eine bestimmte Tiefe der ersten Naht, das bedeutet also eine bestimmte Höhe e des extremen Engspaltes 9, vorhanden sein. Die Höhe e des extremen Engspaltes 9 liegt dabei erfindungsgemäss im Bereich des 6- bis 10fachen seiner Breite b und beträgt mindestens 40 mm.

Das WIG-Schweissverfahren im extremen Engspalt 9 ist besonders geeignet zum Verbinden von Metallteilen aus Ni-Basislegierungen, da bei diesem Schweissverfahren nur sehr kleine Wärmeeinflusszonen entstehen und diese Werkstoffe vor allem in der Wärmeeinflusszone extrem fehleranfällig sind. Auf diese Weise ist eine hervorragende Schweissgüte zu erreichen.

### Bezugszeichenliste

- 1: zu verbindendes Metallteil
- 2: zu verbindendes Metallteil
- 3: Schweissnaht
- 4: Engspalt
- 5: Werkstückflanke am Engspalt
- 6: Werkstückflanke am Engspalt
- 7: Schweissraupe vom Unterpulverschweissverfahren
- 8: Schweissraupe vom Unterpulverschweissverfahren
- 9: extremer Engspalt
- 10: Zentrierversatzung
- 11: Entlastungswulst
- 12: Solldurchschmelzstelle
- 13: Werkstückflanke am extremen Engspalt
- 14: Werkstückflanke am extremen Engspalt
- 15: Schweissraupe vom WIG-MSG-Schweissverfahren
- a: Breite des Engspaltes
- b: Breite des extremen Engspaltes
- c: Breite des Entlastungswulstes
- d: Höhe des Entlastungswulstes
- e: Höhe des extremen Engspaltes
- h: Höhe der Zentrierversatzung
- α: Winkel zwischen der Horizontalen und dem Entlastungswulst

## Patentansprüche

1. Verfahren zum Verbinden von Metallteilen (1, 2) mittels Lichtbogen-Schmelzschweissen durch eine volumenarme Schweissnaht (3), bei welchem die durch einen Engspalt (4) gebildeten Werkstückflanken (5, 6) durch abwechselnd sich an die eine und an die andere Flanke (5, 6) anlegende Schweissraupen (7, 8) nach dem Unterpulverschweissverfahren verbunden werden, dadurch gekennzeichnet, dass die zu verbindenden Metallteile (1, 2) im Anschluss an den Engspalt (4) noch einen extremen Engspalt (9) und daran anschliessend eine Zentrierversatzung (10) aufweisen und zunächst durch die Zentrierversatzung (10) zueinander positioniert werden, im Nahtgrundbereich ein Entlastungswulst (11) derart ausgebildet wird, dass bei der Schweissung eine Solldurchschmelzstelle (12) entsteht, und die durch den extremen Engspalt (9) gebildeten Werkstückflanken (13, 14) mittels vollautomatischen Wolfram-Inert-Gas-(WIG)-Schweissverfahrens oder Metall-Lichtbogen-Schweissverfahrens unter Schutzgas (MSG) durch mehrlagige Schweissraupen (15), welche sich jeweils über die gesamte Breite (b) des extremen Engspaltes (9) erstrecken, verbunden werden.

2. Verfahren nach Anspruch 1, dadurch gekennzeichnet, dass ein Entlastungswulst (11) mit einer Breite (c) verwendet wird, welche ca. das Dreifache seiner Höhe (d) beträgt.

3. Verfahren nach Anspruch 1, dadurch gekennzeichnet, dass ein extremer Engspalt (9) verwendet wird, dessen Höhe (e) das Sechs- bis Zehnfache seiner Breite (b), mindestens aber 40 mm, beträgt.

4. Verfahren nach Anspruch 1, dadurch gekennzeichnet, dass beim WIG- bzw. MSG-Schweissverfahren ein Schweissdraht verwendet wird, dessen Durchmesser ein Fünftel bis ein Viertel der Breite (b) des extremen Engspaltes (9), mindestens aber 0,8 mm und höchstens 1,6 mm, beträgt.

5. Verfahren nach Anspruch 1, dadurch gekennzeichnet, dass beim WIG- bzw. MSG-Schweissverfahren in Abhängigkeit von der Vorwärmtemperatur mit Stromstärken im Bereich von 200 bis 300 A bei einem Vorschub von 50 bis 200 mm pro Minute gearbeitet wird.

6. Verfahren nach Anspruch 5, dadurch gekennzeichnet, dass in Abhängigkeit vom Anteil an Legierungselementen mit Vorwärmtemperaturen oberhalb von 200°C gearbeitet wird.

7. Verfahren nach Anspruch 1, dadurch gekennzeichnet, dass als Schutzgas Argon oder Argon mit maximal 8% Wasserstoff oder ein Argon-Helium-Gemisch mit 30 bis 70% Argon, Rest Helium verwendet wird.

8. Verfahren nach Anspruch 7, dadurch gekennzeichnet, dass ein Argon-Helium-Gemisch mit 50% Argon und 50% Helium verwendet wird.

## Claims

1. Method of joining metal parts (1, 2) by means of fusion arc welding by a weld (3) of small volume, in which method the workpiece flanks (5, 6) formed by a narrow gap (4) are joined by the submerged-arc welding process by welding beads (7, 8) bearing alternately against the one and the other flank (5, 6), characterized in that the metal parts (1, 2) to be joined have following the narrow gap (4) an extremely narrow gap (9) and adjoining the extremely narrow gap (9) a centring offset (10) and are first of all positioned relative to one another by the centring offset (10), a relief bulge (11) is formed in the weld-bottom area in such a way that a predetermined melt-through point (12) develops during the welding, and the workpiece flanks (13, 14) formed by the extremely narrow gap (9) are joined by means of fully automatic tungsten inert-gas welding process (GTAW) or gas metal-arc welding process (GMAW) by multi-pass welding beads (15) which in each case extend over the entire width (b) of the extremely narrow gap (9).

2. Method according to Claim 1, characterized in that a relief bulge (11) is used having a width (c) which is about three times its height (d).

3. Method according to Claim 1, characterized in that an extremely narrow gap (9) is used, the height (e) of which is six to ten times its width (b), but is at least 40 mm.

4. Method according to Claim 1, characterized in that, during the GTAW or GMAW welding process, a welding wire is used, the diameter of which is one-fifth to one-quarter of the width (b) of the extremely narrow gap (9), but is at least 0.8 mm and at most 1.6 mm.

5. Method according to Claim 1, characterized in that, during the GTAW or GMAW welding process, work is carried out as a function of the preheating temperature with current intensities in the range of 200 to 300 A at a feed of 50 to 200 mm per minute.

6. Method according to Claim 5, characterized in that work is carried out as a function of the proportion of alloying elements with preheating temperatures above 200°C.

7. Method according to Claim 1, characterized in that argon or argon with a maximum of 8% hydrogen or an argon/helium mixture having 30 to 70% argon and the remainder helium is used as inert gas.

8. Method according to Claim 7, characterized in that an argon/helium mixture having 50% argon and 50% helium is used.

## Revendications

1. Procédé pour l'assemblage de pièces métalliques (1, 2) par soudage à l'arc avec une soudure de faible volume (3), dans lequel les flancs (5, 6) formés par une fente étroite (4) sont assemblés par des cordons de soudure (7, 8) déposés en alternance à l'un et à l'autre flanc (5, 6) par le procédé de soudage à l'arc submergé, caractérisé en ce que les pièces métalliques à assembler (1, 2) présentent, à la suite de la fente étroite (4), encore une fente étroite extrême (9) et un embrèvement de centrage (10) qui s'y raccorde et sont en premier lieu positionnées l'une par rapport à l'autre par l'embrèvement de centrage (10), en ce qu'un bourrelet de délestage (11) est formé dans la zone du cordon de fond d'une façon telle qu'il apparaisse lors du soudage une plage choisie de percée de la fusion (12), et que les flancs (13, 14) formés par la fente étroite extrême (9) sont assemblés par des cordons de soudure (15) en plusieurs passes, qui s'étendent chacun sur toute la largeur (b) de la fente étroite extrême (9), par un procédé entièrement automatique de soudage sous gaz inerte avec électrode de tungstène (WIG), ou de soudage à l'arc avec électrode consommable sous gaz protecteur (soudage MSG).

2. Procédé suivant la revendication 1, caractérisé en ce que l'on utilise un bourrelet de délestage (11) avec une largeur (c), qui vaut environ le triple de sa hauteur (d).

3. Procédé suivant la revendication 1, caractérisé en ce que l'on utilise une fente étroite extrême (9), dont la hauteur (e) vaut de six à dix fois sa largeur (b), mais au moins 40 mm.

4. Procédé suivant la revendication 1, caractérisé en ce que l'on utilise, dans le procédé de soudage WIG, respectivement MSG, une baguette de soudage, dont le diamètre vaut un cinquième à un quart de la largeur (b) de la fente étroite extrême (9), mais au moins 0,8 mm et au plus 1,6 mm.

5. Procédé suivant la revendication 1, caractérisé en ce que, dans le procédé de soudage WIG, respectivement MSG, on opère avec des intensités de courant dans la gamme de 200 à 300 A avec une avance de 50 à 200 mm par minute, en fonction de la température de préchauffage.

6. Procédé suivant la revendication 5, caractérisé en ce que l'on opère avec des températures de préchauffage supérieures à 200°C, en fonction de la proportion d'éléments d'alliage.

7. Procédé suivant la revendication 1, caractérisé en ce que l'on utilise, comme gaz protecteur, de l'argon ou de l'argon avec 8 % maximum d'hydrogène ou un mélange argon-hélium avec 30 à 70 % d'argon, le reste étant de l'hélium.

8. Procédé suivant la revendication 7, caractérisé en ce que l'on utilise un mélange argon-hélium avec 50 % d'argon et 50 % d'hélium.
